# EUROPÄISCHE PATENTSCHRIFT

(11) **EP 1 120 917 B1**
(45) Veröffentlichungstag und Bekanntmachung des Hinweises auf die Patenterteilung: **06.08.2008**
(21) Anmeldenummer: 00204473.3
(22) Anmeldetag: 12.12.2000
(51) Int. Cl.: H04B 1/38

(54) **Mobilfunkempfänger mit integriertem Rundfunkempfänger**
Mobile radio receiver with integrated broadcast receiver
Radiorécepteur mobile avec récepteur de diffusion intégré

(30) Priorität: 22.12.1999 DE 19961924
(43) Veröffentlichungstag der Anmeldung: 01.08.2001
(73) Patentinhaber: NXP B.V., 5656 AG Eindhoven (NL)
(72) Erfinder: Bauer, Harald, Philips Corp. Intell. Prop. GmbH, 52064 Aachen (DE)
(74) Vertreter: van der Veer, Johannis Leendert

(56) Entgegenhaltungen:
- US-A- 5 905 947

## Beschreibung

Die Erfindung betrifft ein Gerät zur Mobilen Kommunikation, beispielsweise einen Mobilfunkempfänger mit einem integrierten Rundfunkempfänger.

Aus DE 41 41 382 A1 ist beispielsweise ein drahtloses Komforttelefon bekannt, welches mit verschiedenen Zusatzfunktionen wie Rechner, Diktiergerät, Fernbedienung und Rundfunk und/oder Fernsehempfänger ausgestattet ist. Hierbei sollen die für Telefonfunktionen vorhandenen Elemente, wie beispielsweise Ziffernfeld, Funktionstasten und insbesondere die Stromversorgung vom Telefon und den integrierten Zusatzfunktionen gemeinsam genutzt werden.

Eine gleichzeitige Nutzung anderer Teile eines Gerätes zur Mobilen Kommunikation als Tasten, Anzeigevorrichtungen und Stromversorgung bei Geräten der Mobilen Kommunikation ist bislang daran gescheitert, dass die Geräte zur Mobilen Kommunikation wegen ständiger Erreichbarkeit auch bei Nichtgebrauch Steuerinformationen empfangen müssen.

Aufgabe der Erfindung ist es Schaltungsteile von Endgeräten der Mobilen Kommunikation zum Empfang von Rundfunksignalen gemeinsam zu nutzen.

Diese Aufgabe wird dadurch gelöst, dass wenigstens eine Komponente des Empfangsteils zum Empfang von Rundfunksignalen vorgesehen ist, wobei vorgesehen ist zu den Zeiten, in denen Steuerinformationen zur Mobilen Kommunikation empfangen werden, die beim Rundfunkempfang entstehende Lücke zu verdecken.

Der Vorteil besteht darin, dass sich nun auch Komponenten des Mobilfunkempfänger zum Rundfunkempfang genutzt werden können, ohne dass die beim Empfang von Steuerinformationen entstehende Lücke von einem Zuhörer bemerkt wird. Insbesondere bei Nutzung eines meist ohnehin vorhandenen Digitalen Signalprozessors zur Verdeckung der Lücke im Rundfunksignal ist der zusätzliche Platzbedarf für die Funktion des Rundfunkempfängers kleiner, als wenn Rundfunkempfangsteil und Empfangsteil des Mobilfunkempfängers nebeneinander integriert wären.

Die Erfindung wird nun an Hand von in den Zeichnungen dargestellten Ausführungsbeispielen näher beschrieben und erläutert.

Es zeigen:
- Fig. 1: Schaltschema eines erfindungsgemäßen Empfängers
- Fig. 2: Erstes Ausführungsbeispiel, bei dem nur bestimmte Schaltungsteile einer Empfangsstufe gemeinsam für Mobilfunk- und Rundfunkempfang genutzt werden.

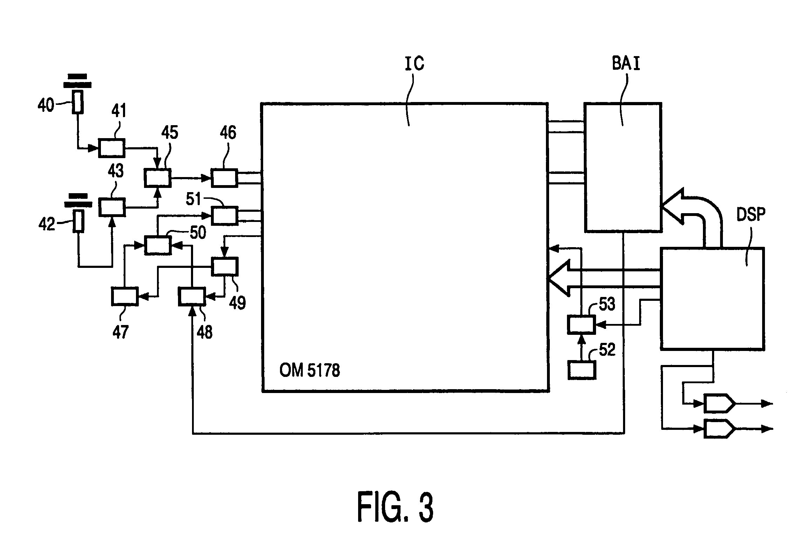

- Fig. 3: Zweites Ausführungsbeispiel, bei dem eine integrierte Empfangsstufe vollständig für den Empfang von Mobilfunksignalen und Rundfunksignalen genutzt wird

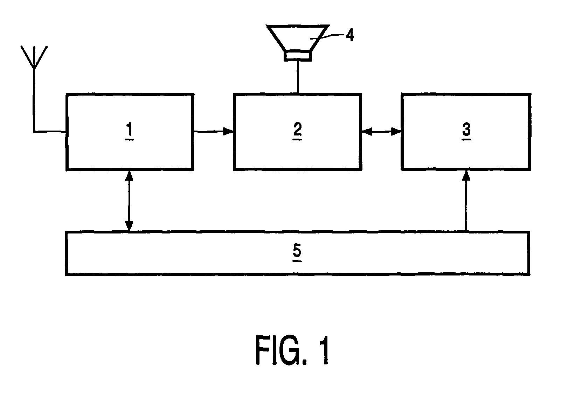

Fig. 1 zeigt das Grundkonzept eines Empfängers entsprechend der Erfindung. Ein einem Empfangsteil 1 werden möglichst viele Komponenten des Empfangsteils gemeinsam zum Empfang der Mobilfunkkanäle als auch eines Rundfunksenders genutzt und mittels einer Audiostufe 2 und eines Digitalen Signalprozessors 3 zur Wiedergabe über einen Lautsprecher 4 bzw. Kopfhörer weiterverarbeitet. Mittels einer Steuervorrichtung 5 wird das Empfangsteil während des Rundfunkempfangs zu den vorgegebenen Zeiten auf den Empfang der Steuerkanäle in den Mobilfunkbändern umgeschaltet. Während dieser Zeit erzeugt der Digitale Signalprozessor 3 ein Ersatzsignal, mittels welchen die durch den Empfang der Steuerinformationen entstehende Empfangslücke im Rundfunkband verdeckt wird. Beispielsweise wiederholt der Digitale Signalprozessor hierzu einfach eine Sequenz, die im Rundfunkband vor der Umschaltung empfangen wurde, beispielsweise die letzten 20 ms eines empfangenen Audiosignals.

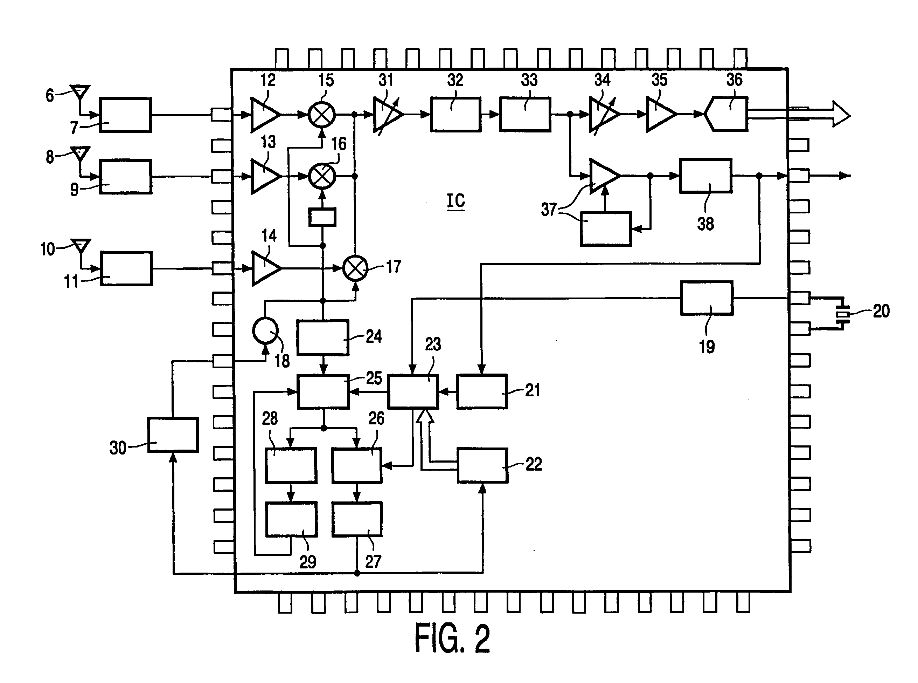

Figur 2 zeigt ein mögliches Ausführungsbeispiel eines Empfangsteils 1 eines Mehrbandfunkgerätes für GSM, DCS 1800 und Rundfunksignale im UKW-Band. Die meisten Schaltungsteile des Empfangsteils sind in einer integrierten Schaltung IC enthalten. Da der Sendeteil vom Rundfunkempfänger nicht genutzt wird, und deshalb nicht Bestandteil der Erfindung ist, ist er der Übersichtlichkeit wegen, auch nicht gezeigt. Auch andere, dem Fachmann geläufige Komponenten wie Tastatur, Anzeigeelemente und Stromversorgung, die in bekannter Weise sowohl für den Mobilfunkempfang als auch für den Rundfunkempfang genutzt werden, sind aus diesem Grund nicht dargestellt.

Eine erste Antenne 6 und eine erstes Vorfilter 7 sind zum Empfang des DCS 1800 Bandes, eine zweite Antenne 8 und ein zweites Vorfilter 9 zum Empfang des GSM-Bandes und eine dritte Antenne 10 und ein drittes Vorfilter 11 zum UKW-Rundfunkempfang vorgesehen. Über getrennte Vorverstärker 12, 13, 14 sind die einzelnen Empfangssignale getrennten Mischstufen 15, 16, 17 zugeführt. Die Mischfrequenz wird jedoch in einem, allen Mischstufen und damit für alle Frequenzbänder von einem gemeinsamen Oszillator 18 mittels einer PLL-Schaltung erzeugt. Im Ausführungsbeispiel besteht diese PLL-Schaltung aus einem Quarzoszillator 19, einem extern an der integrierten Schaltung IC angeschlossenem Schwingquarz 20, einer Automatischen Frequenzsteuereinheit 21, einem Einrastdetektor 22, einem Sequentiellen Schaltteil 23, einem Vorzähler 24, einem Programmierbaren Zähler 25, einem Phasendetektor 26, einer Ladungspumpe 27, einem Schieberegister 28, einem Stationsspeicher 29 und einem extern an das IC angeschlossenen Tiefpassfilter 30.

Das im Ausführungsbeispiel gewählte Empfangskonzept ist ein Nahe-Null-Zwischenfrequenzkonzept welches eine zu den Empfangsfrequenzen gesehen relativ niedrige Zwischenfrequenz, beispielsweise 100 KHz verwendet. Das jeweils empfangene Frequenzband ist einer ersten automatischen Verstärkungsregelung 31 zugeführt und durchläuft anschließend ein polyphasiges Near-Zero-Zwischenfrequenzfilter 32. Anschließend werden die Empfangssignale von GSM und DCS 1800 in einem zweiten Automatischen Verstärkungsregler 33, einem Pufferverstärker 34 und einem Analog-Digital-Umsetzer 35 weiterverarbeitet, während für die Rundfunksignale ein paralleler Verarbeitungszweig mit einem dritten Automatischen Verstärkungsregler 37 und einem polyphasigen FM-Detektor 38 vorgesehen ist.

Generell muss bei dem Konzept der Erfindung ein Kompromiss zwischen gemeinsamer Nutzung einzelner Schaltungsteile des Empfangteils zum Empfang von Mobilfunkbändern und Rundfunkbändern und dem Aufwand mittels welchem diese Schaltungsteile gemeinsam genutzt werden können, gefunden werden. Im vorangegangenen Ausführungsbeispiel erhöht sich lediglich der Aufwand in der gemeinsamen PLL-Schaltung, beispielsweise weil die Frequenz bei Rundfunksendern nicht so stabil ist wie bei Mobilfunksendern und daher die Empfangsfrequenz auf die schwankende Sendefrequenz der Rundfunksender nachgestellt werden muss.

Bei dem zweiten Ausführungsbeispiel hingegen wird ein für Mobilfunkempfang geeigneter Integrierter Schaltkreis (in diesem Ausführungsbeispiel der Schaltkreis OM5178 der Fa. Philips) ohne Modifikationen vollständig auch zum Empfang der Rundfunksignalbänder genutzt. Lediglich wegen der unterschiedlichen Empfangsfrequenzen von Mobilfunkbändern und Rundfunkbändern benötigt die PLL einen niedrigeren Referenztakt. Bei diesem erfindungsgemäßen Konzept werden GSM-Empfangssignale und Rundfunkempfangssignale mittels getrennter Antennen 40, 42 und getrennter Vorfilter 41, 43 empfangen und mittels eines ersten Umschalters 45 und einem ersten Balun 46 dem Hochfrequenzsignaleingang der integrierten Schaltung IC zugeführt. Des weiteren sind für das GSM-Band und das Rundfunkband getrennte, externe steuerbare Oszillatoren 47, 48 vorgesehen, welchen über ein externes PLL-Filter 49 jeweils das Stellsignal des in der integrierten Schaltung IC enthaltenen PLL-Schaltkreises zugeführt ist. Mittels eines zweiten Umschalters 50 wird das Ausgangssignal des jeweiligen steuerbaren Oszillators ausgewählt und über einen zweiten Balun 51 der integrierten Schaltung zugeführt. Außerdem wird ein externer Oszillator 52 verwendet, dessen Ausgangssignal wegen der erforderlichen niedrigeren Referenzfrequenz für das Rundfunkband über einen vom Digitalen Signalprozessor DSP einstellbaren Frequenzteiler 53 geführt ist. Alle spezifischen Funktionen zum Rundfunkempfang, wie zum Beispiel Stereodetektion, wie auch die Detektion von im Rundfunksignal enthaltenen anderen Funktion wie RDS (Radio Data Signal) werden nun vollständig im Digitalen Signalprozessor DSP, beziehungsweise im Baseband Audio Interface BAI ausgeführt. Zum Beispiel wird das AFC-Signal zur Nachführung der Empfangsfrequenz für Rundfunksendungen an die Schwankungen des Rundfunksenders im Baseband Audio Interface BAI erzeugt und an einen zweiten Steuergang des steuerbaren Oszillators 48, der zur Einstellung der Rundfunkempfangsfrequenz benutzt wird, geführt.

Die Frequenzbänder GSM und DCS1800 sind natürlich nur als Beispiel angegeben, genau so gut ist die Erfindung auch auf andere Empfangsbänder anwendbar, soweit zwischendurch in einem Bereitschaftszustand Steuerinformationen empfangen werden müssen.

## Patentansprüche

1. Endgerät für Mobile Kommunikation mit einem Empfangsteil bei dem wenigstens eine Komponente des Empfangsteils auch zum Empfang von Rundfunksignalen vorgesehen ist, wobei vorgesehen ist zu den Zeiten, in denen Kontrollinformationen zur Mobilen Kommunikation empfangen werden, die beim Rundfunkempfang entstehende Lücke zu verdecken.

2. Endgerät nach Anspruch 1,
**dadurch gekenntzeichnet,**
**dass** der Empfänger für ein Nahe-Null-Zwischenfrequenzkonzept ausgelegt ist.

3. Endgerät nach Anspruch 1,
bei dem das Mobilfunkempfangssignal und Rundfunkempfangssignale über ein einziges Zwischenfrequenzfilter (32) geführt sind.

4. Empfangsgerät nach Anspruch 1 oder 2,
**dadurch gekennzeichnet,**
**dass** Mobilfunkempfangssignale und Rundfunkempfangssignale über steuerbare Umschalter (41) mit einem Eingang einer Empfangsstufe verbindbar ausgestaltet sind.

5. Empfangsgerät nach einem der vorangehenden Ansprüche,
**dadurch gekennzeichnet.**
das zur Verdeckung der Lücke beim Rundfunkempfang ein zuvor empfangenes und gespeichertes Audiosignal wiederholt wird.

## Claims

1. A terminal device for mobile communication which includes a receiving section in which at least one component of the receiving section is arranged to also receive broadcast signals, there being provided that the gap arising in the broadcast reception at instants at which control information is received for mobile communication is masked.

2. A terminal device as claimed in claim 1, **characterized in that** the receiver is designed for a near-zero intermediate frequency concept.

3. A terminal device as claimed in claim 1, wherein mobile radio receiving signals and broadcast receiving signals are conducted via a single intermediate frequency filter (32).

4. A receiving device as claimed in claim 1 or 2, **characterized in that** the mobile radio receiving signals and broadcast receiving signals can be applied to an input of a receiving stage via controllable switches (41).

5. A receiving device as claimed in one of the preceding claims, **characterized in that** a previously received and stored audio signal is repeated so as to mask the gap arising during the broadcast reception.

## Revendications

1. Appareil terminal pour la communication mobile avec une partie de récepteur, dans lequel au moins un composant de la partie de récepteur est également prévu pour la réception de signaux de diffusion, moyennant quoi il est prévu, pour les moments au cours desquels sont reçues les informations de contrôle à destination de la communication mobile, de couvrir l'intervalle vide se produisant lors de la réception de diffusion.

2. Appareil terminal selon la revendication 1,
**caractérisé en ce que**
le récepteur est conçu pour un concept de fréquence intermédiaire proche de zéro.

3. Appareil terminal selon la revendication 1,
dans lequel le signal de réception radio mobile et
les signaux de diffusion radio sont amenés par un seul filtre de fréquence intermédiaire (32).

4. Appareil terminal selon la revendication 1 ou 2,
**caractérisé en ce que**
les signaux de réception radio mobile et les signaux de réception de diffusion radio sont configurés de façon à pouvoir être réunis par l'intermédiaire d'un commutateur (41) avec une entrée d'un étage de réception.

5. Appareil terminal selon l'une des revendications précédentes,
**caractérisé en ce que**
pour couvrir l'intervalle vide lors de la réception de diffusion, on réitère un signal audio préalablement reçu et mémorisé.
